# EUROPEAN PATENT APPLICATION

(11) **EP 2 953 008 A1**
(43) Date of publication of application: **09.12.2015**
(21) Application number: 13873255.7
(22) Date of filing: 09.12.2013
(51) Int. Cl.: G06F 3/023, G06F 3/041, G06F 3/048, H03M 11/04, H04M 1/00

(54) **INFORMATION TERMINAL, DISPLAY METHOD FOR IMAGE FOR INFORMATION INPUT, AND COMPUTER-READABLE RECORDING MEDIUM**

(30) Priority: 30.01.2013 JP 2013015298
(71) Applicant: NEC Solution Innovators, Ltd., Tokyo 136-8627 (JP)
(72) Inventor: SAKANE, Eiji, Tokyo 136-8627 (JP)
(74) Representative: Betten & Resch
(86) International application number: PCT/JP2013/082951
(87) International publication number: WO 2014/119134

(57) **Abstract**

An information terminal 100 accepts key entry made by a touch on an information input image 21 a on a screen, e.g., an image of a keyboard constituting a software keyboard. The information terminal 100 includes a display control unit 11 that specifies an attribute value necessary for displaying the information input image 21a based on a rule preset for a display of the information input image 21 a, and an image display unit 12 that causes the information input image 21a to be displayed on the screen based on the specified attribute value. With this information terminal 100, the attribute value necessary for displaying the information input image can be easily changed.

## Description

### TECHNICAL FIELD

The present invention relates to input systems using information input images, e.g., an information terminal having a software keyboard, a method for displaying an information input image, and a computer-readable recording medium recording a program for achieving them.

### BACKGROUND ART

In recent years, in the field of information terminals, software keyboards have been increasingly used in place of physical keyboards as touch panels widespread. With an information terminal on which a software keyboard is employed, a user can make key entry by touching a key on a keyboard displayed on a screen.

However, since the software keyboard is constituted by an information input image displayed on the screen, a problem arises in that the visibility, the operability, and the like thereof are likely to be lower than those of a physical keyboard. For this reason, various kinds of development have been made in order to improve the visibility, the operability, and the like of the software keyboard.

For example, Patent Document 1 discloses an information terminal that can display an information input image of a software keyboard (an image of a keyboard) in a translucent state in order to suppress a decrease in the amount of information on a screen as a result of the information on the screen being blocked by the information input image. Patent Document 2 discloses an information terminal on which a screen is automatically scrolled such that an input box for inputting a text or the like is not hidden by an information input image when the input box overlaps the information input image.

### LIST OF PRIOR ART DOCUMENTS

### PATENT DOCUMENT

Patent Document 1: JP 2007-183787A
Patent Document 2: JP 2011-254358A

### DISCLOSURE OF THE INVENTION

### PROBLEMS TO BE SOLVED BY THE INVENTION

Thus, with the information terminals disclosed in Patent Documents 1 and 2 above, it is conceivable that an improvement of the visibility and the operability of the software keyboard are achieved. However, with these information terminals, attribute values, e.g., the display position, the display size, the display color, the degree of transparency, and the like for a display of the information input image of the software keyboard are fixed, and it is difficult to change these attribute values. Therefore, the improvement of the visibility and the operability is limited on the information terminals disclosed in Patent Documents 1 and 2 above.

An object of the present invention is to solve the foregoing problem and provide an information terminal, a method for displaying an information input image, and a computer-readable recording medium with which an attribute value necessary for displaying an information input image can be easily changed.

### MEANS FOR SOLVING THE PROBLEMS

To achieve the above-stated object, an information terminal according to one aspect of the present invention is an information terminal that accepts key entry made by a touch on an information input image on a screen, and the information terminal includes:
a display control unit that specifies an attribute value necessary for displaying the information input image, based on a rule preset for a display of the information input image; and
an image display unit that causes the information input image to be displayed on the screen based on the attribute value which is specified.

Also, to achieve the above-stated object, a method for displaying an information input image according to one aspect of the present invention is an information input image display method for displaying an information input image on a screen when key entry is made by a touch on an information terminal, and the method includes:
a step (a) of specifying an attribute value necessary for displaying the information input image, based on a rule preset for a display of the information input image; and
a step (b) of causing the information input image to be displayed on the screen based on the attribute value that is specified in the step (a).

Furthermore, to achieve the above-stated object, a computer-readable recording medium according to one aspect of the present invention is a computer-readable recording medium recording a program for displaying an information input image on a screen when key entry is made by a touch on a computer, and the program includes a command for causing the computer to execute:
a step (a) of specifying an attribute value necessary for displaying the information input image, based on a rule preset for a display of the information input image; and
a step (b) of causing the information input image to be displayed on the screen based on the attribute value that is specified in the step (a).

### ADVANTAGEOUS EFFECTS OF THE INVENTION

As described above, according to the present invention, an attribute value necessary for displaying an information input image can be easily changed.

### BRIEF DESCRIPTION OF THE DRAWINGS

[Figure 1] FIG. 1 is a block diagram showing a configuration of an information terminal according to Embodiment 1 of the present invention.
[Figure 2] FIG. 2 is a flowchart showing operations at the time when the information terminal according to Embodiment 1 of the present invention executes processing for storing a rule description.
[Figure 3] FIG. 3 is a diagram showing an exemplary rule description used in Embodiment 1 of the present invention.
[Figure 4] FIG. 4 is a diagram showing the rule description shown in FIG. 3 after the change.
[Figure 5] FIG. 5 is a flowchart showing operations at the time when the information terminal according to Embodiment 1 of the present invention executes processing for displaying the information input image.
[Figure 6] FIG. 6 is a block diagram showing a configuration of an information terminal according to Embodiment 2 of the present invention.
[Figure 7] FIG. 7 is a diagram showing an exemplary rule description used in Embodiment 2 of the present invention.
[Figure 8] FIG. 8 is a flowchart showing operations at the time when the information terminal according to Embodiment 2 of the present invention executes processing for displaying the information input image.
[Figure 9] FIG. 9 is a block diagram showing a configuration of an information terminal according to Embodiment 3 of the present invention.
[Figure 10] FIG. 10 is a diagram showing an exemplary rule description used in Embodiment 3 of the present invention.
[Figure 11] FIG. 11 is a flowchart showing operations at the time when the information terminal according to Embodiment 3 of the present invention executes processing for displaying the information input image.
[Figure 12] FIG. 12 is a block diagram showing a configuration of an information terminal according to Embodiment 4 of the present invention.
[Figure 13] FIG. 13 is a diagram showing an exemplary rule description used in Embodiment 4 of the present invention.
[Figure 14] FIG. 14 is a flowchart showing operations at the time when the information terminal according to Embodiment 4 of the present invention executes processing for displaying the information input image.
[Figure 15] FIG. 15 is a block diagram showing an exemplary portable terminal apparatus that can be used as the information terminals according to Embodiments 1 to 4 of the present invention.

### MODE FOR CARRYING OUT THE INVENTION

### (Embodiment 1)

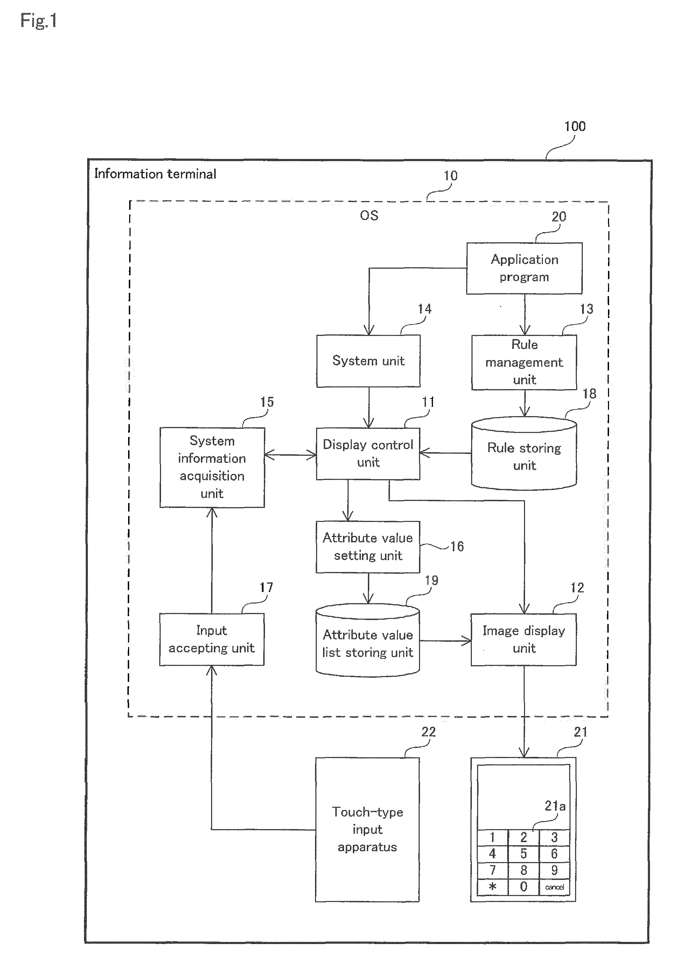

An information terminal, a method for displaying an information input image, and a program according to Embodiment 1 of the present invention will be described below with reference to FIGS. 1 to 6.

### [Apparatus configuration]

Firstly, a configuration of an information terminal according to Embodiment 1 will be described using FIG. 1. FIG. 1 is a block diagram showing a configuration of the information terminal according to Embodiment 1 of the present invention.

First, an information terminal 100 according to Embodiment 1 shown in FIG. 1 is an apparatus that accepts key entry made by a touch on an information input image 21 a on a screen of a display panel 20. In Embodiment 1, the information terminal 100 is a smartphone, a tablet-type terminal, a laptop personal computer, or the like on which touch entry is enabled. The information input image 21 a is an image of a keyboard that constitutes a software keyboard.

As shown in FIG. 1, the information terminal 100 includes a display control unit 11 and an image display unit 12. Of these, the display control unit 11 specifies attribute values necessary for displaying the information input image 21 a based on a rule that is preset regarding a display of the information input image 21 a. The image display unit 12 causes the information input image 21 a to be displayed on the screen based on the specified attribute values.

Thus, in the information terminal 100, the attribute value of the information input image 21a constituting the software keyboard is determined by the preset rule. Accordingly, the attribute value necessary for the display can be easily changed by rewriting only the rule.

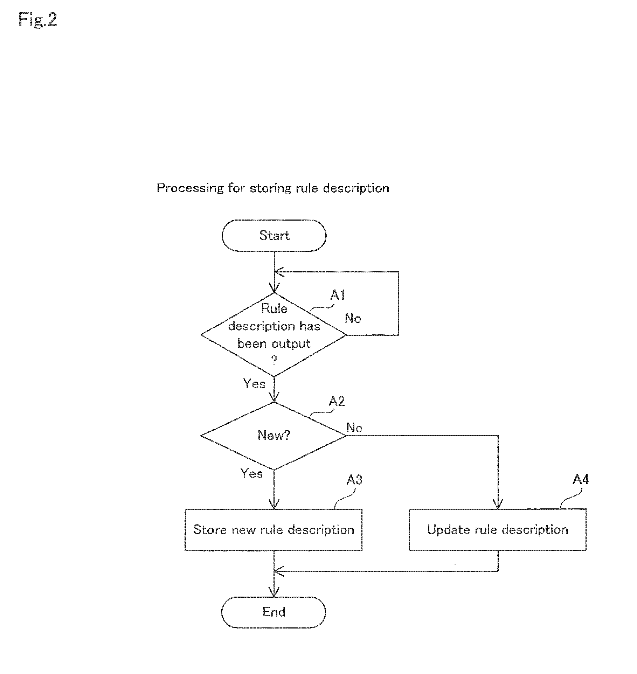

The configuration of the information terminal 100 according to Embodiment 1 will now be described in more detail. As shown in FIG. 2, the information terminal 100 includes, in addition to the display control unit 11 and the image display unit 12, a rule management unit 13, a system unit 14, a system information acquisition unit 15, an attribute value setting unit 16, an input accepting unit 17, a rule storing unit 18, and an attribute value list storing unit 19.

Also, in the Embodiment 1, the display control unit 11, the image display unit 12, the rule management unit 13, the system unit 14, the system information acquisition unit 15, the attribute value setting unit 16, and the input accepting unit 17 are constructed on an operating system (OS) 10 installed in the information terminal 100 by program modules. The rule storing unit 18 and the attribute value list storing unit 19 are constructed in a storage area of a storage apparatus, such as a memory, which is managed by the operating system 10. Furthermore, in the operating system 10, an application program 20 that requires a display of the information input image 21 a is executed.

The rule management unit 13 receives the aforementioned rule from the application program 20, and provides the received rule to the display control unit 11. If the application program 20 has changed the rule, the rule management unit 13 provides the changed rule to the display control unit 11.

Specifically, the application program 20 outputs a rule description that describes the aforementioned rule, and the rule management unit 13 accordingly receives this rule description from the application program 20. The rule management unit 13 stores the received rule description in the rule storing unit 18 in order to provide the rule description to the display control unit 11. The display control unit 11 acquires the rule from the rule storing unit 18.

Upon the application program 20 changing the rule, the rule management unit 13 receives the changed rule description and updates, using this, the rule description stored in the rule storing unit 18. For this reason, the change of the rule by the application program 20 is also immediately reflected in the display control unit 11, and as a result, attribute values necessary for the display is also immediately changed, as described later.

In Embodiment 1, the rule defines attribute values regarding the information input screen, such as the display position (the coordinates: X-coordinate value, Y-coordinate value), the display size (the number of dots in X direction, the number of dots in Y direction), the display color (white, black, red, etc.), and the transmittance (0% to 100%), for example. Note that the type of the attribute values defined by the rule is not limited to the above examples. The possible range of each attribute value is not particularly limited either.

The system unit 14 manages the overall system, and for example, upon the application program 20 making a request to display the information input screen 21 a, the system unit 14 requests the display control unit 11 to display the information input image 21a on the screen. The display control unit 11, upon receiving this request, executes the aforementioned processing.

When the display control unit 11 receives the request to display the information input image 21 a from the system unit 14, the system information acquisition unit 15 acquires system information necessary for specifying the attribute values from the operation 10 in accordance with the request of the display control unit 11.

Specifically, in Embodiment 1, the system information acquisition unit 15 acquires information (hereinafter referred to as "app information") regarding the application program 20. Note that the information that the system information acquisition unit 15 acquires need only be numeric data that can be acquired from the operation system 10, and is not particularly limited.

In Embodiment 1, the display control unit 11, upon receiving the request from the system unit 14, acquires the rule from the rule storing unit 18, and specifies the attribute values necessary for displaying the information input image 21a based on the acquired rule and app information.

Specifically, in Embodiment 1, the rule is set for each application program to be executed in the information terminal 10, as described later. Accordingly, the display control unit 11 specifies a rule corresponding to the application program that is being executed, based on the acquired rule and app information, and specifies the attribute values based on the specified rule. The display control unit 11 also generates a list (an attribute value list) that includes the specified attribute values, and outputs this list to the attribute value setting unit 16. Thereafter, the display control unit 11 requests the image display unit 12 to display the information input image 21 a.

The attribute value setting unit 16, upon receiving the attribute value list, determines whether or not each attribute value included in the received attribute value list is appropriate as the attribute value to be used to display the information input image 21 a by the image display unit 12. If the attribute value setting unit 16 determines that the attribute value is appropriate, the attribute value setting unit 16 stores the attribute value list subjected to the determination in the attribute value list storing unit 19.

In the present embodiment, the image display unit 12, upon receiving the display request from the display control unit 11, acquires the attribute value list from the attribute value list storing unit 19, and displays the information input image 21 a on the screen of the display panel 21 based on the acquired attribute value list. If an execution screen of the application program 20 is already displayed on the display panel 21, the image display unit 12 displays the information input image 21a so as to superimpose the information input image 21a on the execution screen.

The input accepting unit 17 also accepts information from a touch-type input apparatus 22 provided in the information terminal 100, and outputs the received information to the system information acquisition unit 15. In Embodiment 1, the touch-type input apparatus 22 is a touch panel, and outputs information of the coordinates of a position touched by the user.

### [Apparatus operation]

Next, operations of the information terminal 100 according to Embodiment 1 of the present invention will be described using FIGS. 2 to 5. In the following description, FIG. 1 will be referenced as appropriate. In Embodiment 1, a method for displaying the information input image is implemented by causing the information terminal 100 to operate. Accordingly, the following description of the operations of the information terminal 100 will be substituted for the description of the method for displaying the information input image according to Embodiment 1.

### [Apparatus operation > storing processing]

First, processing for storing the rule description will be described using FIG. 2. FIG. 2 is a flowchart showing operations at the time when the information terminal according to Embodiment 1 of the present invention executes the processing for storing the rule description.

Initially, as shown in FIG. 2, the rule management unit 13 determines whether or not the rule description has been output from the application program 20 (step A1). If a result of the determination in step A1 is that the rule description has not been output, the rule management unit 13 enters a standby state.

On the other hand, if a result of the determination in step A1 is that the rule description has been output, the rule management unit 13 determines whether the output rule description is new or for changing a rule description that is already stored in the rule storing unit 18 (step A2).

If a result of the determination in step A2 is that the output rule description is new, the rule management unit 13 causes the output rule description to be stored in the rule storing unit 18 (step A3).

On the other hand, if a result of the determination in step A2 is that the output rule description is not new, i.e., is for changing the already-stored rule description, the rule management unit 13 updates the rule description stored in the rule storing unit 18 using the output rule description (step A4).

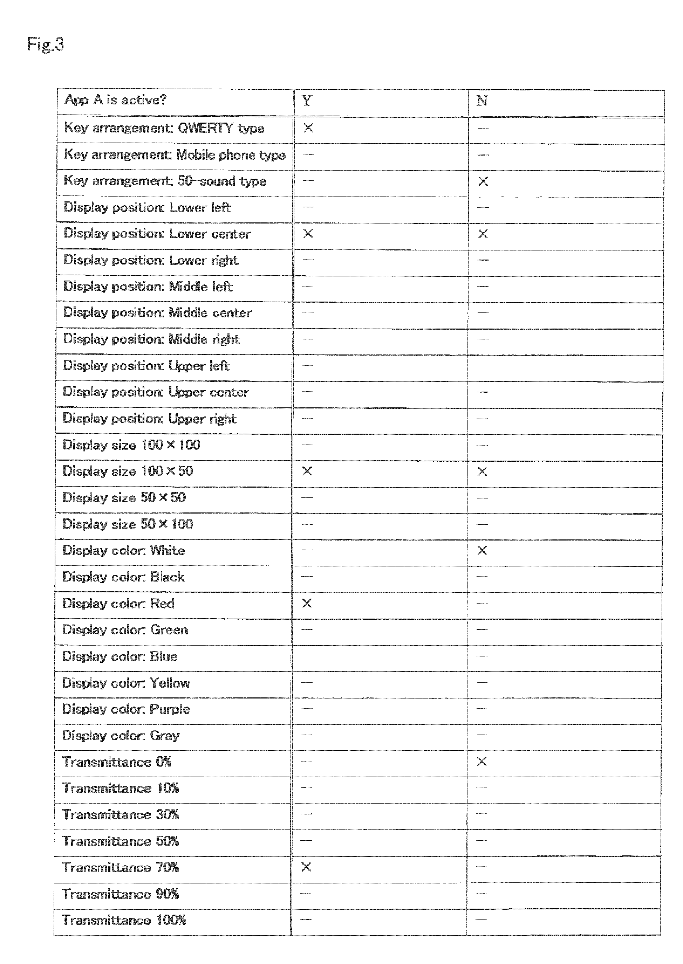

A specific example of the rule description will now be described using FIG. 3. FIG. 3 is a diagram showing an exemplary rule description used in Embodiment 1 of the present invention. As shown in FIG. 3, in Embodiment 1, the rule description is constituted by a decision table (which conforms to the JIS X 0125 1986 decision table). Note that the rule description need only be a description of the rule, and the format thereof is not limited.

In the rule description (decision table) shown in FIG. 3, the rule is set for each execution status of the application program 20 (hereinafter also referred to as an "app A"). Specifically, in the decision table in FIG. 3, it is set as a condition in a condition box (an upper left box among four boxes divided by double lines) whether or not the app A is active. Rules are separately set for the case "Y" where the condition is satisfied and the case "N" where the condition is not satisfied.

Also, in the rule description in FIG. 3, a list of attribute values is shown in a lower left box among the four boxes divided by the double lines. Regarding each condition, an "x" mark is written in a box of an attribute value to be set, and a "-" mark is written in a box of an attribute value that is not to be set.

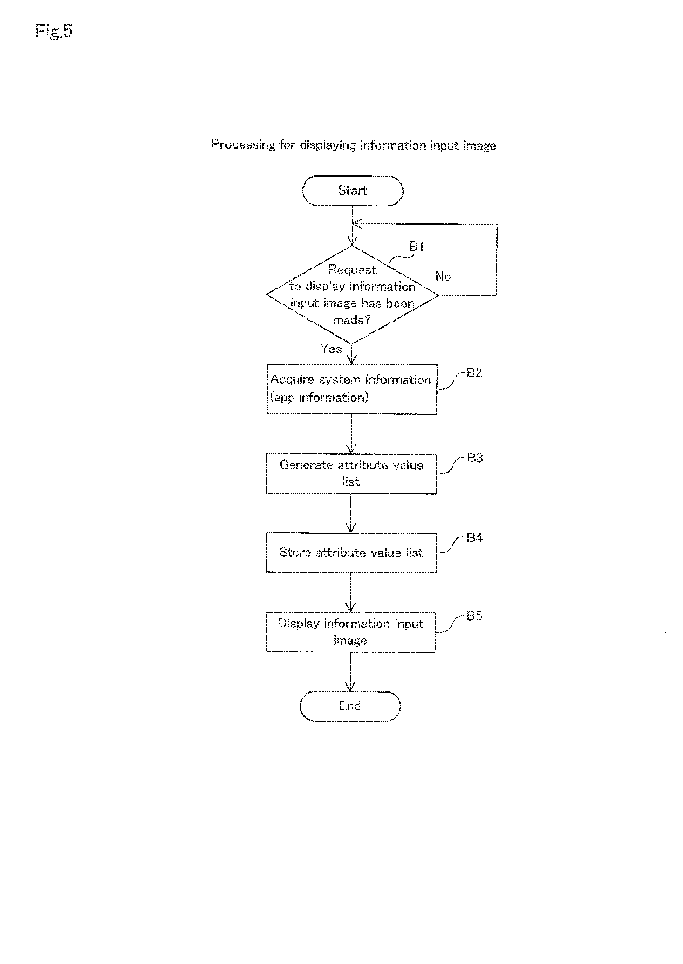

Accordingly, in the case where the rule description shown in FIG. 3 is stored in the rule storing unit 18, if the app A is active, the display control unit 11 generates the following attribute value list in step B3 shown in later-described FIG. 5.

[Attribute value list when app A is active]
Key arrangement: QWERTY type
Display position: Lower center
Display size: 100×50
Display color: Red
Transmittance: 70%

On the other hand, if the app A is not active, the display control unit 11 generates the following attribute value list in step B3 in later-described FIG. 5.

[Attribute value list when App A is not active]
Key arrangement: 50-sound type
Display position: Lower center
Display size: 100×50
Display color: White
Transmittance: 0%

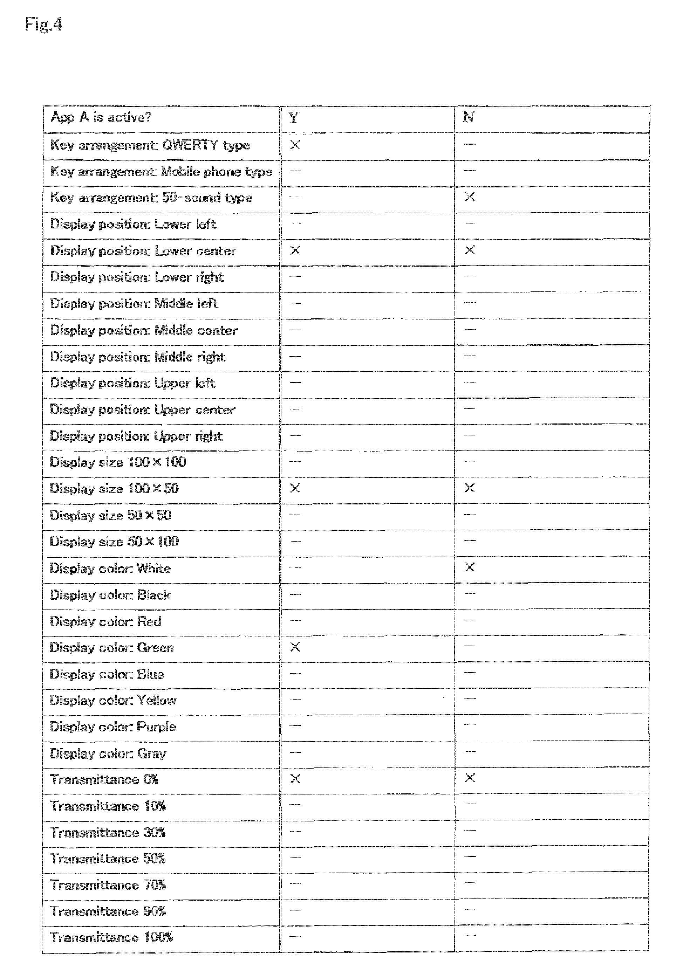

Subsequently, a description will be given of the case where the app A has changed the rule description in a situation where the rule description shown in FIG. 3 is stored. FIG. 4 is a diagram showing the rule description shown in FIG. 3 after the change.

In the example in FIG. 4, the app A has changed the display color of the information input image when the app A is active from "red" to "green", and has further changed the transmittance from "70%" to "0%". In this case, the display control unit 11 generates the following attribute value list in step B3 in later-described FIG. 5.

[Attribute value list when app A is active (after change)]
Key arrangement: QWERTY type
Display position: Lower center
Display size: 100×50
Display color: Green
Transmittance: 0%

### [Apparatus operation> display processing]

Subsequently, processing for displaying the information input image will be described using FIG. 5. FIG. 5 is a flowchart showing operations at the time when the information terminal according to Embodiment 1 of the present invention executes processing for displaying the information input image.

The processing shown in FIG. 5 is based on the premise that the app A requests the system unit 14 to newly display the information input screen 21 a or change the attribute values in accordance with a change of the rule description, and the system unit 14 requests the display control unit 11 to display the information input image 21 a.

As shown in FIG. 5, initially, the display control unit 11 determines whether or not the request to display the information input screen 21 a has been output from the system unit 14 (step B1). If a result of the determination in step B1 is that the request has not been output, the display control unit 11 enters a standby state. On the other hand, if a result of the determination in step B1 is that the request has been output, the display control unit 11 requests the system information acquisition unit 15 to acquire the system information.

Next, the system information acquisition unit 15, upon being requested to acquire the system information, acquires the app information of the application program 20 that is active on the operating system 10 as the system information (step B2). The system information acquisition unit 15 also outputs the acquired app information to the display control unit 11.

Next, the display control unit 11 accesses the rule storing unit 18 to acquire the rule description (see FIGS. 3 and 4), specifies the attribute values necessary for displaying the information input image 21 a based on the received app information and the acquired rule description, and generates the attribute value list that includes the specified attribute values (step B3).

Specifically, since the app A is active in this case, the display control unit 11 specifies the attribute values to which the "x" mark is given for the case "Y" in FIG. 3 (or FIG. 4) and generates the attribute value list using the specified attribute values (see the above "Attribute value list when app A is active").

Next, the display control unit 11 outputs the generated attribute value list to the attribute value setting unit 16 and requests the attribute value setting unit 16 to store the generated attribute value list in the attribute value list storing unit 19. The attribute value setting unit 16 thereby stores the attribute value list in the attribute value list storing unit 19 (step B4). Also, in step B4, the attribute value setting unit 16 notifies the display control unit 11 of completion of the storage upon the storage of the attribute value list being finished.

Next, the display control unit 11, upon receiving the notification of the completion of the storage from the attribute value setting unit 16, requests the image display unit 12 to display the information input image 21 a. The image display unit 12 thereby acquires the attribute value list from the attribute value list storing unit 19, and displays the information input image 21 a so as to superimpose the information input image 21 a on the execution screen of the app A that is displayed on the display panel 21, based on the acquired attribute value list (step B5).

After steps B1 to B5 are thus executed, an image of a keyboard, which is the information input image 21 a, is displayed on the screen of the display panel 21 in accordance with the set rule. Since steps B1 to B5 are repeatedly executed, if the app A has changed the rule description, the information input image 21a is redisplayed based on the changed rule description.

### [Effect of Embodiment 1]

As described above, in Embodiment 1, the attribute values of the information input image (an image of a keyboard), such as the display location, the size, the color, and the transmittance can be easily changed by the application program changing the rule description. Accordingly, according to Embodiment 1, the visibility of the information input image can be significantly improved.

In Embodiment 1, since the attribute values can be easily changed, trial and error for improving the visibility and the operability can be easily done, and therefore the ease of development of the software keyboard or the like is also improved. Furthermore, if the rule description is created in the form of a file or the like that can be easily replaced, the rule description can be easily changed or replaced, and therefore the ease of development is further improved.

In Embodiment 1, since various kinds of information of the system can be easily reflected in the attribute values of the information input image 21 a, an improvement of the operability thereof at the time of performing input operations using the information input image is achieved.

### [Program]

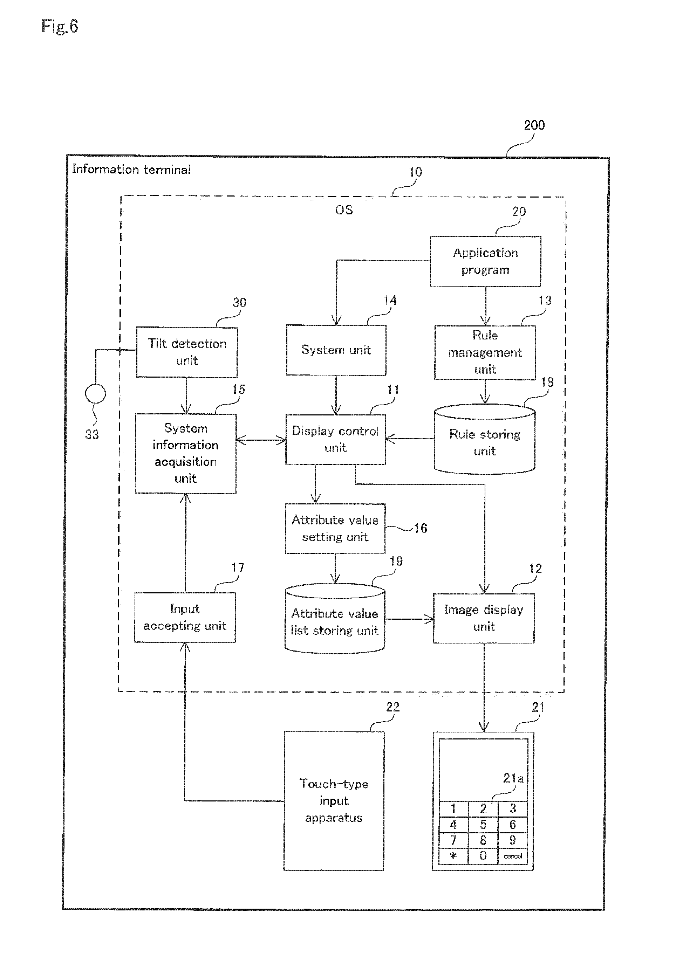

A program according to Embodiment 1 need only be a program that causes a computer constituting the information terminal 100 to execute steps A1 to A4 shown in FIG. 3 and steps B1 to B5 shown in FIG. 6. By installing and executing this program in the computer, the information terminal 100 and the method for displaying the information input image according to Embodiment 1 can be achieved. In this case, a CPU (Central Processing Unit) of the computer functions as the display control unit 11, the image display unit 12, the rule management unit 13, the system unit 14, the system information acquisition unit 15, the attribute value setting unit 16, and the input accepting unit 17, and performs the processing.

### (Embodiment 2)

An information terminal, a method for displaying an information input image, and a program according to Embodiment 2 of the present invention will be described below with reference to FIGS. 6 to 8.

### [Apparatus configuration]

Firstly, a configuration of an information terminal according to Embodiment 2 will be described using FIG. 6. FIG. 6 is a block diagram showing a configuration of the information terminal according to Embodiment 2 of the present invention.

As shown in FIG. 6, an information terminal 200 according to Embodiment 2 includes a tilt detection unit 30 and an acceleration sensor 33, and is different from the information terminal 100 according to Embodiment 1 shown in FIG. 1 in this regard. Note that the other features of the information terminal 200 are configured similarly to the information terminal 100 according to Embodiment 1. Differences from Embodiment 1 will be mainly described below.

In FIG. 6, the tilt detection unit 30 detects a tilt of the information terminal 200 based on a signal from the acceleration sensor 33, and outputs information (hereinafter referred to as "tilt information") that specifies the detected tilt to the system information acquisition unit 15. The system information acquisition unit 15 also outputs system information including the tilt information to the display control unit 11.

In Embodiment 2, in the rule description, a rule is set for each tilted state of the information terminal 200. For this reason, the display control unit 11 specifies a corresponding rule based on the tilt of the information terminal 200 specified by the tilt information, and further generates an attribute value list that is based on the specified rule.

Therefore, according to Embodiment 2, for example, the information input image 21 a can be moved such that the user can easily view the information input image 21 a in accordance with a tilt direction of the information terminal 200.

### [Apparatus operation]

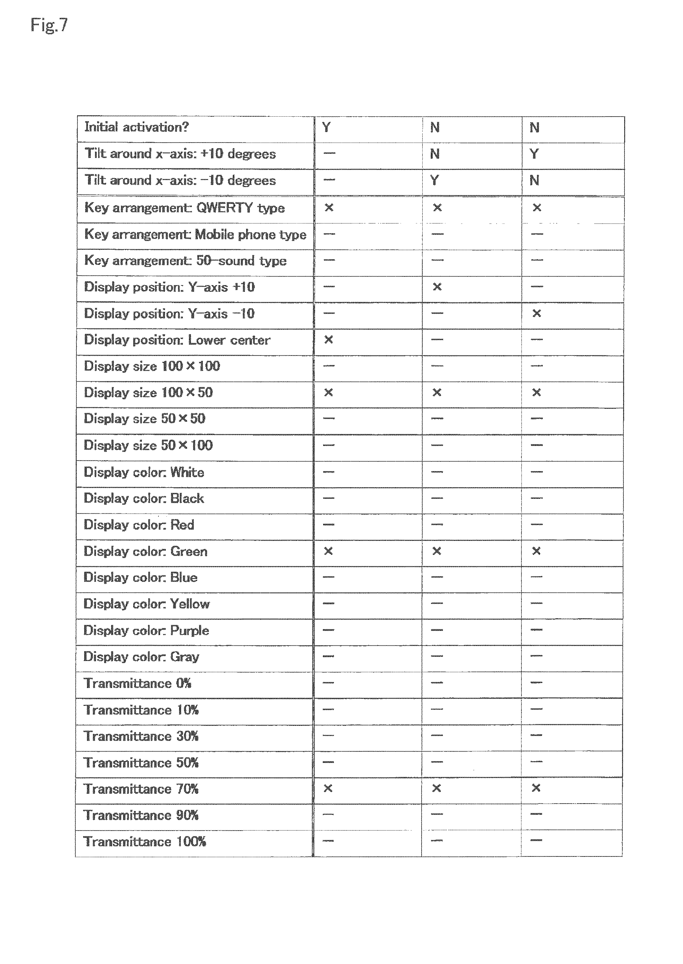

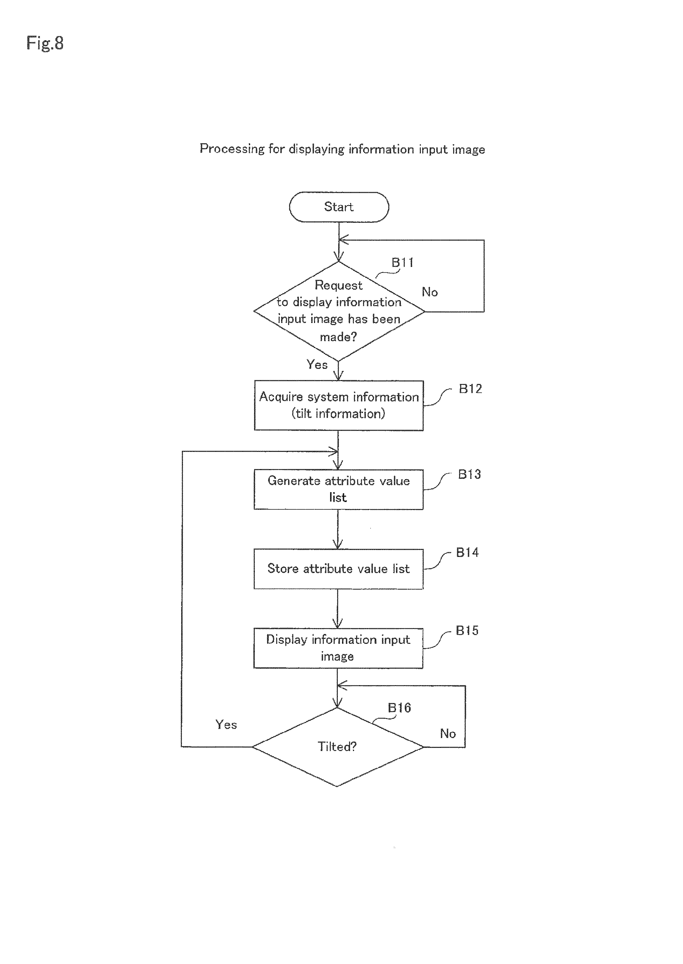

Next, operations of the information terminal 200 according to Embodiment 2 of the present invention will be described using FIGS. 7 and 8. In the following description, FIG. 6 will be referenced as appropriate. In Embodiment 2, a method for displaying the information input image is implemented by causing the information terminal 200 to operate. Accordingly, the following description of the operations of the information terminal 200 will be substituted for the description of the method for displaying the information input image according to Embodiment 2.

First, a specific example of the rule description used in Embodiment 2 will be described. Note that, in Embodiment 2 as well, processing for storing the rule description is performed similarly to the storing processing in Embodiment 1 shown in FIG. 2.

FIG. 7 is a diagram showing an exemplary rule description used in Embodiment 2 of the present invention. As shown in FIG. 7, in Embodiment 2 as well, the rule description is constituted by a decision table (which conforms to the JIS X 0125 1986 decision table).

In the rule description (decision table) shown in FIG. 7, the rule is set for each tilted state of the information terminal 200. Specifically, in the decision table in FIG. 7, "initial activation", "tilt around x-axis: +10 degrees", and "tilt around x-axis: -10 degrees" are set as conditions in a condition box (an upper left box among four boxes divided by double lines). Three rules are set for the case "Y" where the conditions are satisfied and the case "N" where the conditions are not satisfied. Note that the x-axis is a virtual axis passing through the center of the screen of the display panel and parallel with the horizontal direction of the screen.

Furthermore, in the rule description in FIG. 7 as well, a list of attribute values is shown in a lower left box among the four boxes divided by the double lines, and regarding each condition, an "x" mark is written in a box of an attribute value to be set, and a "-" mark is written in a box of an attribute value that is not to be set, as in the example in FIG. 3.

Accordingly, when the rule description shown in FIG. 7 is stored in the rule storing unit 18, if the app A is first activated, the display control unit 11 generates the following attribute value list (see step B3 in FIG. 5). Note that the "x-axis" shown in FIG. 7 is an axis parallel with the horizontal direction of the screen of the information terminal 200.

[Attribute value list at the time of initial activation]
Key arrangement: QWERTY type
Display position: Lower center
Display size: 100×50
Display color: Green
Transmittance: 70%

If the information terminal 200 is tilted +10 degrees around the x-axis (if the upper part of the information terminal is tilted toward the distal side 10 degrees as viewed from the user) after the app A is activated, the display control unit 11 generates the following attribute value list (see step B3 in FIG. 5).

[Attribute value list when tilt around x-axis is +10 degrees]
Key arrangement: QWERTY type
Display position: X coordinate remains at current position, Y coordinate moves by +10 (+10 upward)
Display size: 100×50
Display color: Green
Transmittance: 70%

On the other hand, if the information terminal 200 is tilted -10 degrees around the x-axis (if the upper part of the information terminal is tilted toward the proximal side 10 degrees as viewed from the user) after the app A is activated, the display control unit 11 generates the following attribute value list (see step B3 in FIG. 5).

[Attribute value list when tilt around x-axis is -10 degrees]
Key arrangement: QWERTY type
Display position: X coordinate remains at current position, Y coordinate moves by -10 (-10 downward)
Display size: 100×50
Display color: Green
Degree of transparency: 70%

### [Apparatus operation > display processing]

Subsequently, processing for displaying the information input image will be described using FIG. 8. FIG. 8 is a flowchart showing operations at the time when the information terminal according to Embodiment 2 of the present invention executes processing for displaying the information input image.

The processing shown in FIG. 8 is also based on the premise, similarly to the processing shown in FIG. 5, that the app A requests the system unit 14 to newly display the information input screen 21 a or change the attribute values in accordance with a change of the rule description, and the system unit 14 requests the display control unit 11 to display the information input image 21 a.

As shown in FIG. 8, initially, the display control unit 11 determines whether or not the request to display the information input screen 21 a has been output from the system unit 14 (step B11). If a result of the determination in step B11 is that the request has not been output, the display control unit 11 enters a standby state. On the other hand, if a result of the determination in step B11 is that the request has been output, the display control unit 11 requests the system information acquisition unit 15 to acquire system information.

Next, the system information acquisition unit 15, upon being requested to acquire the system information, acquires the tilt information as the system information from the tilt detection unit 30, and outputs the acquired tilt information to the display control unit 11 (step B12).

Next, the display control unit 11 accesses the rule storing unit 18 to acquire the rule description (see FIGS. 3 and 4), specifies the attribute values necessary for displaying the information input image 21 a based on the received tilt information and the acquired rule description, and generates the attribute value list that includes the specified attribute values (step B13). At this time, if step B13 is performed immediately after the app A is activated, the attribute value list at the time of initial activation is generated even if the information terminal 200 is in a tilted state.

Next, the display control unit 11 outputs the generated attribute value list to the attribute value setting unit 16 and requests the attribute value setting unit 16 to store the attribute value list in the attribute value list storing unit 19. The attribute value setting unit 16 thereby stores the attribute value list in the attribute value list storing unit 19 (step B14). Also, in step B14 as well, the attribute value setting unit 16 notifies the display control unit 11 of completion of the storage upon the storage of the attribute value list being finished.

Next, the display control unit 11, upon receiving the notification of the completion of the storage from the attribute value setting unit 16, requests the image display unit 12 to display the information input image 21 a. The image display unit 12 thereby acquires the attribute value list from the attribute value list storing unit 19, and displays the information input image 21a so as to superimpose the information input image 21 a on the execution screen of the app A that is displayed on the display panel 21, based on the acquired attribute value list (step B 15).

Subsequently, the display control unit 11 causes the system information acquisition unit 15 to reacquire the tilt information, and after acquiring this, the display control unit 11 determines whether or not the tilt of the information terminal 200 has changed (step B16).

If a result of step B16 is that the tilt of the information terminal 200 has not changed, the display control unit 11 enters a standby state. On the other hand, if a result of step B16 is that the tilt of the information terminal 200 has changed, the display control unit 11 again executes step B 13 and updates the display of the information input image 21 a using the reacquired tilt information.

### [Effect of Embodiment 2]

Thus, in Embodiment 2, since the tilt of the information terminal 200 is always monitored, and the display position of the information input image 21 a is changed in accordance with the tilt, the visibility and the operability thereof is further improved.

### [Program]

A program according to Embodiment 2 need only be a program that causes a computer constituting the information terminal 200 to execute steps A1 to A4 shown in FIG. 3 and steps B11 to B16 shown in FIG. 8. By installing and executing this program in the computer, the information terminal 200 and the method for displaying the information input image according to Embodiment 2 can be achieved. In this case, a CPU in the computer functions as the display control unit 11, the image display unit 12, the rule management unit 13, the system unit 14, the system information acquisition unit 15, the attribute value setting unit 16, the input accepting unit 17, and the tilt detection unit 30, and performs the processing.

### (Embodiment 3)

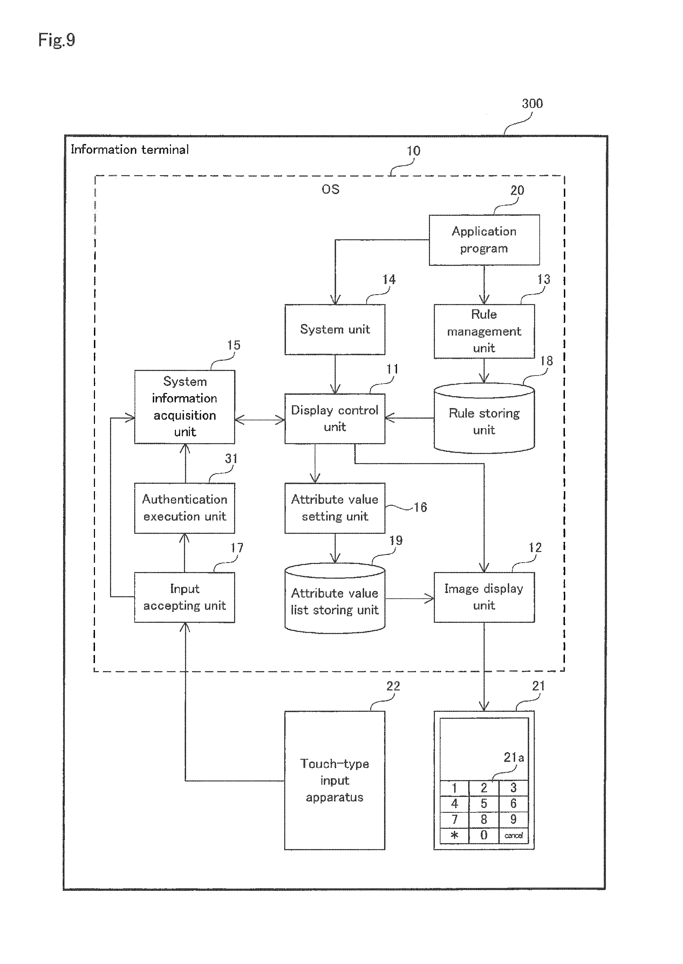

An information terminal, a method for displaying an information input image, and a program according to Embodiment 3 of the present invention will be described below with reference to FIGS. 9 to 11.

### [Apparatus configuration]

Firstly, a configuration of an information terminal according to Embodiment 3 will be described using FIG. 9. FIG. 9 is a block diagram showing a configuration of the information terminal according to Embodiment 3 of the present invention.

As shown in FIG. 9, an information terminal 300 according to Embodiment 3 includes an authentication execution unit 31, and is different from the information terminal 100 according to Embodiment 1 shown in FIG. 1 in this regard. Note that the other features of the information terminal 300 are configured similarly to the information terminal 100 according to Embodiment 1. Differences from Embodiment 1 will be mainly described below.

In FIG. 9, the authentication execution unit 31 receives authentication information (an identifier, a password, etc.) of the user that is input from the touch-type input apparatus 22 via the input accepting unit 17, and performs authentication based on the received authentication information. If the authentication is successful, the authentication execution unit 31 outputs the identifier (a login ID) of the user to the system information acquisition unit 15. Furthermore, in response to this, the system information acquisition unit 15 outputs the output login ID of the user to the display control unit 11.

In Embodiment 3, in the rule description, a rule is set for each login ID of the user. For this reason, the display control unit 11 specifies a corresponding rule based on the output login ID, and further generates an attribute value list that is based on the specified rule.

Thus, according to Embodiment 3, the key arrangement, the size, the color, the transmittance, and the like of the information input image can be set for each user in accordance with preference of the user. That is to say, the information input image can be displayed in accordance with the age (adult, child), the gender, and the like of the user under the most preferable conditions.

### [Apparatus operation]

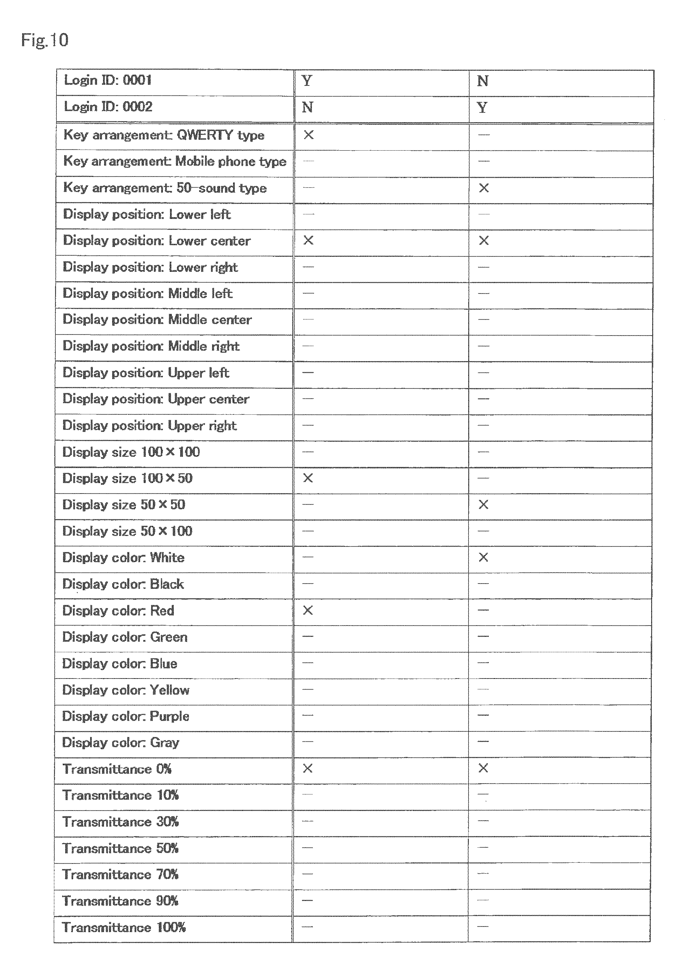

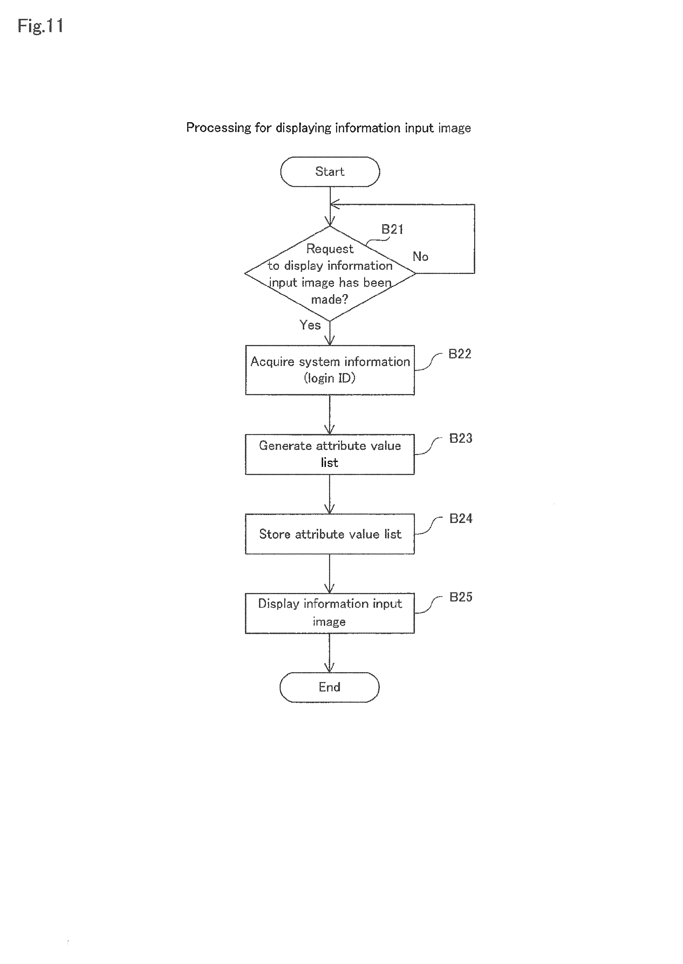

Next, operations of the information terminal 300 according to Embodiment 2 of the present invention will be described using FIGS. 10 and 11. In the following description, FIG. 9 will be referenced as appropriate. In Embodiment 3, a method for displaying the information input image is implemented by causing the information terminal 300 to operate. Accordingly, the following description of the operations of the information terminal 300 will be substituted for the description of the method for displaying the information input image according to Embodiment 3.

First, a specific example of the rule description used in Embodiment 3 will be described. Note that, in Embodiment 3 as well, processing for storing the rule description is performed similarly to the storing processing according to Embodiment 1 shown in FIG. 2.

FIG. 10 is a diagram showing an exemplary rule description used in Embodiment 3 of the present invention. As shown in FIG. 10, in Embodiment 3 as well, the rule description is constituted by a decision table (which conforms to the JIS X 0125 1986 decision table).

In the rule description (decision table) shown in FIG. 10, the rule is set for each identifier (login ID) of the user. Specifically, in the decision table in FIG. 10, "login ID: 0001" and "login ID: 0002" are set as conditions in a condition box (an upper left box among four boxes divided by double lines). Two rules are set for the case "Y" where the conditions are satisfied and the case "N" where the conditions are not satisfied.

Furthermore, in the rule description in FIG. 10 as well, a list of attribute values is shown in a lower left box among the four boxes divided by the double lines, and regarding each condition, an "x" mark is written in a box of an attribute value to be set, and a "-" mark is written in a box of an attribute value that is not to be set, as in the example in FIG. 3.

Accordingly, in the case where the rule description shown in FIG. 10 is stored in the rule storing unit 18, if the app A is active and the login ID of the user is "0001 ", the display control unit 11 generates the following attribute value list (see step B3 in FIG. 5).

[Attribute value list in the case of Login ID: 0001]
Key arrangement: QWERTY type
Display position: Lower center
Display size: 100×50
Display color: Red
Transmittance: 0%

If the login ID of the user is "0002", the display control unit 11 generates the following attribute value list (see step B3 in FIG. 5).

[Attribute value list in the case of Login ID: 0002]
Key arrangement: 50-sound type
Display position: Lower center
Display size: 50×50
Display color: White
Degree of transparency: 0%

### [Apparatus operation > display processing]

Subsequently, processing for displaying the information input image will be described using FIG. 11. FIG. 11 is a flowchart showing operations at the time when the information terminal according to Embodiment 3 of the present invention executes processing for displaying the information input image.

The processing shown in FIG. 11 is also based on the premise, similarly to the processing shown in FIG. 5, that the app A requests the system unit 14 to newly display the information input screen 21 a or change the attribute values in accordance with a change of the rule description, and the system unit 14 requests the display control unit 11 to display the information input image 21 a.

As shown in FIG. 11, initially, the display control unit 11 determines whether or not the request to display the information input screen 21 a has been output from the system unit 14 (step B21). If a result of the determination in step B21 is that the request has not been output, the display control unit 11 enters a standby state. On the other hand, if a result of the determination in step B21 is that the request has been output, the display control unit 11 requests the system information acquisition unit 15 to acquire system information.

Next, the system information acquisition unit 15, upon being requested to acquire the system information, acquires a login ID with which authentication has been successful as the system information from the authentication execution unit 31, and outputs the acquired login ID to the display control unit 11 (step B22).

Next, the display control unit 11 accesses the rule storing unit 18 to acquire the rule description (see FIGS. 3 and 4), specifies the attribute values necessary for displaying the information input image 21a based on the received login ID and the acquired rule description, and generates the attribute value list that includes the specified attribute values (step B23).

Next, the display control unit 11 outputs the generated attribute value list to the attribute value setting unit 16 and requests the attribute value setting unit 16 to store the attribute value list in the attribute value list storing unit 19. The attribute value setting unit 16 thereby stores the attribute value list in the attribute value list storing unit 19 (step B24). Also, in step B24 as well, the attribute value setting unit 16 notifies the display control unit 11 of completion of the storage upon the storage of the attribute value list being finished.

Next, the display control unit 11, upon receiving the notification of the completion of the storage from the attribute value setting unit 16, requests the image display unit 12 to display the information input image 21a. The image display unit 12 thereby acquires the attribute value list from the attribute value list storing unit 19, and displays the information input image 21a so as to superimpose the information input image 21 a on the execution screen of the app A that is displayed on the display panel 21, based on the acquired attribute value list (step B25).

### [Effect of Embodiment 3]

Thus, in Embodiment 3, the key arrangement, the size, the color, the transmittance, and the like of the information input image 21a can be changed for each user, and therefore the visibility and the operability thereof is further improved.

### [Program]

A program according to Embodiment 3 need only be a program that causes a computer constituting the information terminal 300 to execute steps A1 to A4 shown in FIG. 3 and steps B21 to B25 shown in FIG. 11. By installing and executing this program in the computer, the information terminal 300 and the method for displaying the information input image according to Embodiment 3 can be achieved. In this case, a CPU in the computer functions as the display control unit 11, the image display unit 12, the rule management unit 13, the system unit 14, the system information acquisition unit 15, the attribute value setting unit 16, the input accepting unit 17, and the authentication execution unit 31, and performs the processing.

### (Embodiment 4)

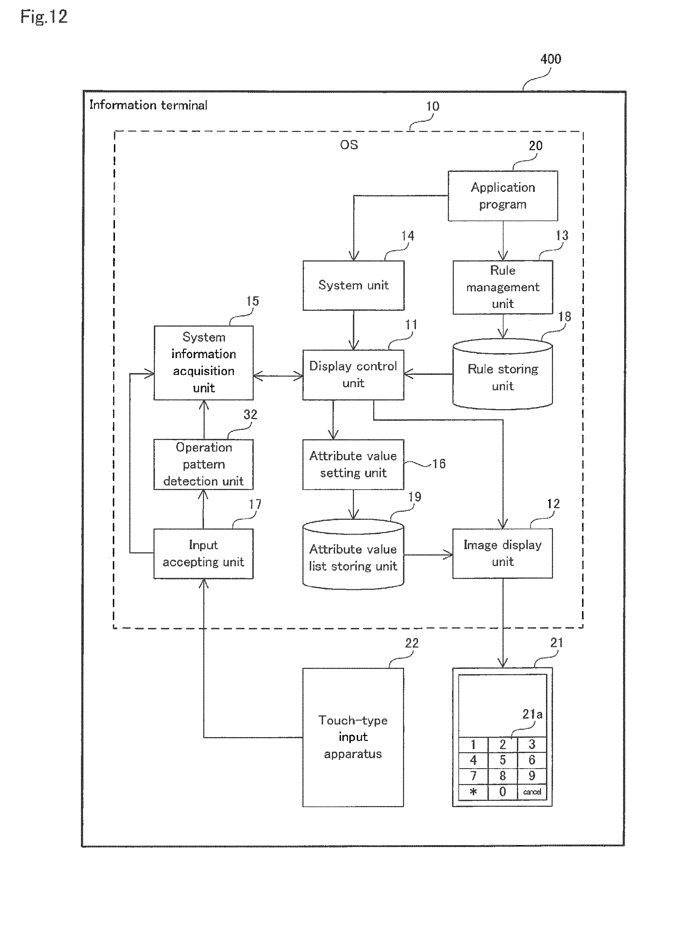

An information terminal, a method for displaying an information input image, and a program according to Embodiment 4 of the present invention will be described below with reference to FIGS. 12 to 14.

### [Apparatus configuration]

Firstly, a configuration of an information terminal according to Embodiment 4 will be described using FIG. 12. FIG. 12 is a block diagram showing a configuration of the information terminal according to Embodiment 4 of the present invention.

As shown in FIG. 12, the information terminal 400 according to Embodiment 4 includes an operation pattern detection unit 32, and is different from the information terminal 100 according to Embodiment 1 shown in FIG. 1 in this regard. Note that the other features of the information terminal 400 are configured similarly to the information terminal 100 according to Embodiment 1. Differences from Embodiment 1 will be mainly described below.

In FIG. 12, the operation pattern detection unit 32 receives, via the input accepting unit 17, information (hereinafter referred to as "operation information") that specifies a user operation which is input to the touch-type input apparatus 22, and detects an operation pattern made on the screen by the user.

Specifically, the operation information contains the coordinates of each touch position at each set time. Accordingly, the operation pattern detection unit 32 specifies a temporal change of each touch position, and determines based on the specified temporal change whether or not the operation pattern made on the screen by the user corresponds to pinch-in or pinch-out.

The operation pattern detection unit 32 then outputs a determination result to the system information acquisition unit 15. Furthermore, in response to this, the system information acquisition unit 15 outputs the output determination result to the display control unit 11.

In Embodiment 4, in the rule description, a rule is set for each operation pattern of the user. For this reason, the display control unit 11 specifies a corresponding rule based on the operation pattern of the determination result, and further generates an attribute value list that is based on the specified rule.

Thus, according to Embodiment 4, the size, the color, the transmittance, and the like of the information input image can be changed in accordance with the operation pattern of the user, such as pinch-in or pinch-out. Note that, in Embodiment 4, "pinch-in" refers to an operation of the user simultaneously touching two points on a touch surface of the touch-type input apparatus 22 and shortening the distance between these two points. "Pinch-out" refers to an operation of the user simultaneously touching two points on the touch surface of the touch-type input apparatus 22 and widening the distance between these two points.

### [Apparatus operation]

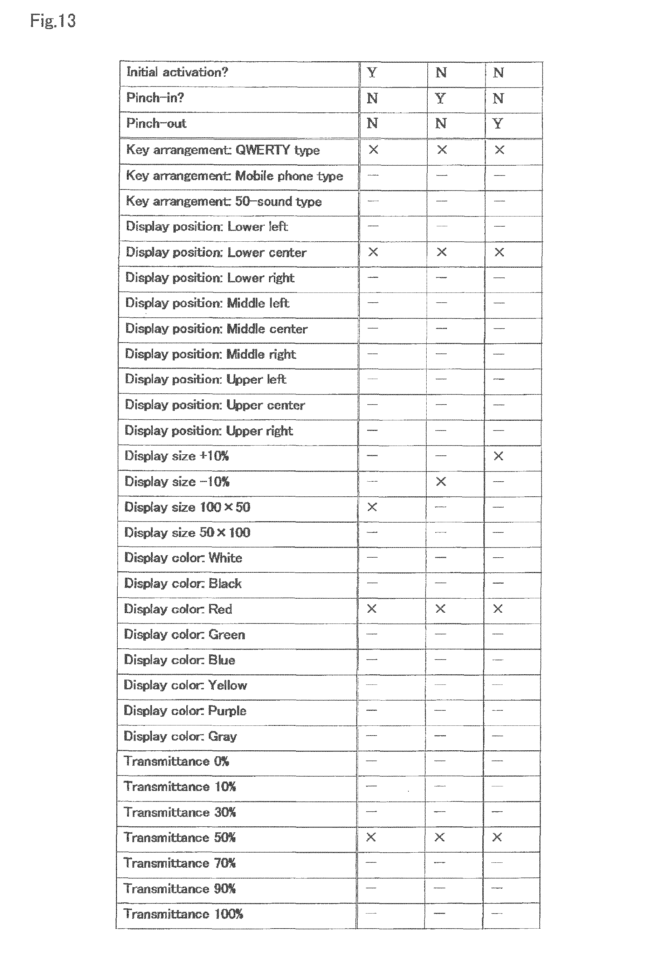

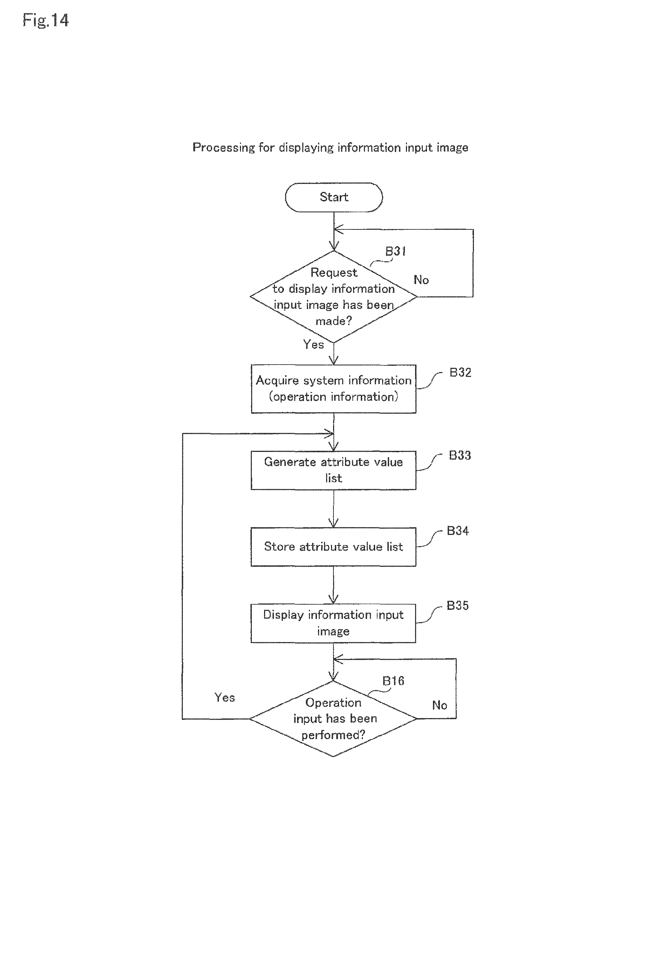

Next, operations of the information terminal 400 in Embodiment 4 of the present invention will be described using FIGS. 13 and 14. In the following description, FIG. 12 will be referenced as appropriate. In Embodiment 4, a method for displaying the information input image is implemented by causing the information terminal 400 to operate. Accordingly, the following description of the operations of the information terminal 400 will be substituted for the description of the method for displaying the information input image in Embodiment 4.

First, a specific example of the rule description used in Embodiment 4 will be described. Note that, in Embodiment 4 as well, processing for storing the rule description is performed similarly to the storing processing in Embodiment 1 shown in FIG. 2.

FIG. 13 is a diagram showing an exemplary rule description used in Embodiment 4 of the present invention. As shown in FIG. 13, in Embodiment 4 as well, the rule description is constituted by a decision table (which conforms to the JIS X 0125 1986 decision table).

In the rule description (decision table) shown in FIG. 13, the rule is set for each operation pattern made on the information terminal 400 by the user. Specifically, in the decision table in FIG. 13, "initial activation", "pinch-in", and "pinch-out" are set as conditions in a condition box (an upper left box among four boxes divided by double lines). Three rules are set for the case "Y" where the conditions are satisfied and the case "N" where the conditions are not satisfied.

Furthermore, in the rule description in FIG. 13 as well, a list of attribute values is shown in a lower left box among the four boxes divided by the double lines, and regarding each condition, an "x" mark is written in a box of an attribute value to be set, and a "-" mark is written in a box of an attribute value that is not to be set, as in the example in FIG. 3.

Accordingly, when the rule description shown in FIG. 13 is stored in the rule storing unit 18, if the app A is first activated, the display control unit 11 generates the following attribute value list (see step B3 in FIG. 5).

[Attribute value list at the time of initial activation]
Key arrangement: QWERTY type
Display position: Lower center
Display size: 100×50
Display color: Red
Degree of transparency: 50%

If the user performs pinch-in as an input operation on the information terminal 400 after the app A is activated, the display control unit 11 generates the following attribute value list (see step B3 in FIG. 5).

[At the time of pinch-in input]
Key arrangement: QWERTY type
Display position: Lower center
Display size: Shrink from the current size (-10%)
Display color: Red
Transmittance: 50%

On the other hand, if the user performs pinch-out as an input operation on the information terminal 400 after the app A is activated, the display control unit 11 generates the following attribute value list (see step B3 in FIG. 5).

[At the time of pinch-out input]
Key arrangement: QWERTY type
Display position: Lower center
Display size: Expand from the current size (+10%)
Display color: Red
Degree of transparency: 50%

### [Apparatus operation> display processing]

Subsequently, processing for displaying the information input image will be described using FIG. 14. FIG. 14 is a flowchart showing operations at the time when the information terminal according to Embodiment 4 of the present invention executes processing for displaying the information input image.

The processing shown in FIG. 14 is also based on the premise, similarly to the processing shown in FIG. 5, that the app A requests the system unit 14 to newly display the information input screen 21 a or change the attribute values in accordance with a change of the rule description, and the system unit 14 requests the display control unit 11 to display the information input image 21 a.

As shown in FIG. 14, initially, the display control unit 11 determines whether or not the request to display the information input screen 21 a has been output from the system unit 14 (step B31). If a result of the determination in step B31 is that the request has not been output, the display control unit 11 enters a standby state. On the other hand, if a result of the determination in step B31 is that the request has been output, the display control unit 11 requests the system information acquisition unit 15 to acquire system information.

Next, the system information acquisition unit 15, upon being requested to acquire the system information, acquires the operation information as the system information from the operation pattern detection unit 32, and outputs the acquired operation information to the display control unit 11 (step B32).

Next, the display control unit 11 accesses the rule storing unit 18 to acquire the rule description (see FIGS. 3 and 4), specifies the attribute values necessary for displaying the information input image 21a based on the received operation information and the acquired rule description, and generates the attribute value list that includes the specified attribute values (step B33). At this time, if step B33 is performed immediately after the app A is activated, the attribute value list at the time of initial activation is generated even if the user has performed pinch-in or pinch-out.

Next, the display control unit 11 outputs the generated attribute value list to the attribute value setting unit 16 and requests the attribute value setting unit 16 to store the attribute value list in the attribute value list storing unit 19. The attribute value setting unit 16 thereby stores the attribute value list in the attribute value list storing unit 19 (step B34). Also, in step B34 as well, the attribute value setting unit 16 notifies the display control unit 11 of completion of the storage upon the storage of the attribute value list being finished.

Next, the display control unit 11, upon receiving the notification of the completion of the storage from the attribute value setting unit 16, requests the image display unit 12 to display the information input image 21a. The image display unit 12 thereby acquires the attribute value list from the attribute value list storing unit 19, and displays the information input image 21 a so as to superimpose the information input image 21 a on the execution screen of the app A that is displayed on the display panel 21, based on the acquired attribute value list (step B35).

Subsequently, the display control unit 11 causes the system information acquisition unit 15 to reacquire the operation information, and upon acquiring this, the display control unit 11 determines whether or not the user has performed a set operation input (pinch-in or pinch-out) (step B36).

If a result of step B36 is that the user has not performed the set operation input, the display control unit 11 enters a standby state. On the other hand, if a result of step B36 is that the user has performed the set operation input, the display control unit 11 again executes step B33 using the reacquired operation information and updates the display of the information input image 21a.

### [Effect of Embodiment 4]

Thus, in Embodiment 4, since the user operation to the information terminal 400 is monitored, and the size and the like of the information input image 21 a are changed in accordance with the operation pattern, the visibility and the operability thereof is further improved.

### [Program]

A program in Embodiment 4 need only be a program that causes a computer constituting the information terminal 400 to execute steps A1 to A4 shown in FIG. 3 and steps B31 to B36 shown in FIG. 14. By installing and executing this program in the computer, the information terminal 400 and the method for displaying the information input image in Embodiment 4 can be achieved. In this case, a CPU in the computer functions as the display control unit 11, the image display unit 12, the rule management unit 13, the system unit 14, the system information acquisition unit 15, the attribute value setting unit 16, the input accepting unit 17, and the operation pattern detection unit 32, and performs the processing.

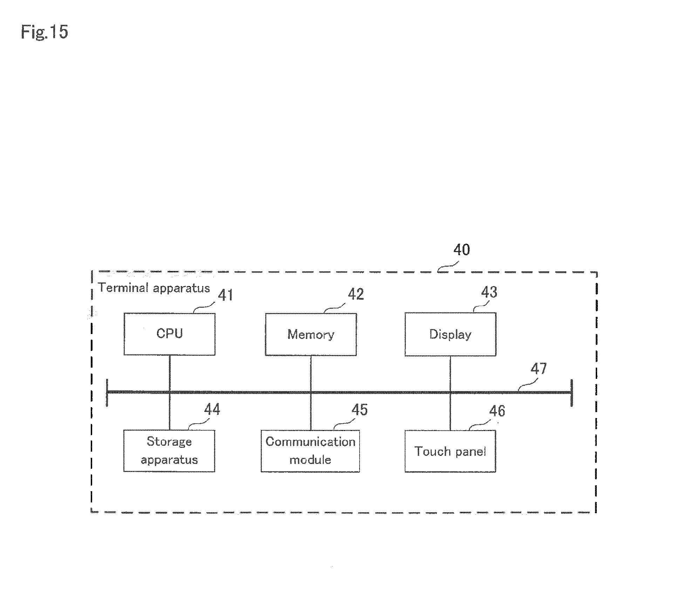

Subsequently, a portable terminal apparatus that achieves an information terminal by executing the programs according to Embodiments 1 to 4 will be described using FIG. 15. FIG. 15 is a block diagram showing an exemplary portable terminal apparatus that can be used as the information terminals according to Embodiments 1 to 4 of the present invention.

As shown in FIG. 15, a portable terminal apparatus 40 includes a CPU 41, a memory 42, a display 43, a storage apparatus 44, a communication module 45, and a touch panel 46. These units are connected to each other in a manner that enables data communication, via a bus 47.

The CPU 41 performs various types of calculation by deploying, in the memory 42, the programs (codes) according to the embodiments stored in the storage apparatus 44 and executing these codes in a predetermined order. The memory 42, typically, is a volatile memory such as a DRAM (Dynamic Random Access Memory).

The programs according to Embodiments 1 to 4 may be provided in a state of being stored in a computer-readable recording medium, or may be transmitted on the Internet connected via the communication module 45. General-purpose semiconductor storage devices such as a CF (Compact Flash (registered trademark)) and an SD (Secure Digital) are given as specific examples of the recording medium.

A hard disk and a semiconductor storage apparatus such as a flash memory are given as specific examples of the storage apparatus 44. The touch panel 46 is an input device that accepts a user input. The display 43 is a display panel such as a liquid crystal display apparatus. The communication module 45 is a device for achieving communication using a wireless LAN and communication using a mobile phone network.

In the embodiments, the terminal apparatus 40 is not limited to the above-described portable terminal apparatus such as a tablet-type terminal or a smartphone, and may be a personal computer such as a laptop PC, an electronic paper, or the like.

The above-described embodiments are represented in full or in part by (Note 1) to (Note 21) described below, but are not limited to the following description.

### (Note 1)

An information terminal that accepts key entry made by a touch on an information input image on a screen, the information terminal including:
a display control unit that specifies an attribute value necessary for displaying the information input image, based on a rule preset for a display of the information input image; and
an image display unit that causes the information input image to be displayed on the screen based on the attribute value that is specified.

### (Note 2)

The information terminal according to Note 1,
wherein the information input image is an image of a keyboard that constitutes a software keyboard.

### (Note 3)

The information terminal according to Note 1 or 2,
further including a rule management unit that receives the rule from an application program executed on the information terminal, and provides the rule which is received to the display control unit,
wherein if the application program has changed the rule, the rule management unit provides the changed rule to the display control unit.

### (Note 4)

The information terminal according to any of Notes 1 to 3,
wherein the rule is set for each execution status of an application program executed on the information terminal, and
the display control unit specifies a rule corresponding to execution status of the application program on the information terminal, and specifies the attribute value based on the specified rule.

### (Note 5)

The information terminal according to any of Notes 1 to 3,
further including a tilt detection unit that detects a tilt of the information terminal,
wherein the rule is set for each tilted state of the information terminal, and
the display control unit specifies a corresponding rule based on the tilt detected by the detection unit, and specifies the attribute value based on the specified rule.

### (Note 6)

The information terminal according to any of Notes 1 to 3,
further including an authentication execution unit that performs authentication based on an identifier which is set for each user of the information terminal,
wherein the rule is set for each identifier of the user, and
the display control unit specifies a rule corresponding to an identifier authenticated by the authentication execution unit, and specifies the attribute value based on the specified rule.

### (Note 7)

The information terminal according to any of Notes 1 to 3,
further including an operation pattern detection unit that detects an operation pattern made on the screen by a user of the information terminal,
wherein the rule is set for each operation pattern, and
the display control unit specifies a corresponding rule based on an operation pattern detected by the operation pattern detection unit, and specifies the attribute value based on the specified rule.

### (Note 8)

An information input image display method for displaying an information input image on a screen when key entry is made by a touch on an information terminal, the method including:
a step (a) of specifying an attribute value necessary for displaying the information input image, based on a rule preset for a display of the information input image; and
a step (b) of causing the information input image to be displayed on the screen based on the attribute value that is specified in the step (a).

### (Note 9)

The information input image display method according to Note 8,
wherein the information input image is an image of a keyboard that constitutes a software keyboard.

### (Note 10)

The information input image display method according to Note 8 or 9, further including:
a step (c) of receiving the rule to be used in the step (a) from an application program executed on the information terminal, and
a step (d) of setting, if the application program has changed the rule, the changed rule as the rule to be used in the step (a).

### (Note 11)

The information input image display method according to any of Notes 8 to 10,
wherein the rule is set for each execution status of an application program executed on the information terminal, and
in the step (a), a rule corresponding to execution status of the application program on the information terminal is specified, and the attribute value is specified based on the specified rule.

### (Note 12)

The information input image display method according to any of Notes 8 to 10, further including a step (e) of detecting a tilt of the information terminal,
wherein the rule is set for each tilted state of the information terminal, and
in the step (a), a corresponding rule is specified based on the tilt detected by the step (e), and the attribute value is specified based on the specified rule.

### (Note 13)

The information input image display method according to any of Notes 8 to 10, further including a step (f) of performing authentication based on an identifier that is set for each user of the information terminal,
wherein the rule is set for each identifier of the user, and
in the step (a), a rule corresponding to an identifier authenticated in the step (f) is specified, and the attribute value is specified based on the specified rule.

### (Note 14)

The information input image display method according to any of Notes 8 to 10, further including a step (g) of detecting an operation pattern made on the screen by a user of the information terminal,
wherein the rule is set for each operation pattern, and
in the step (a), a corresponding rule is specified based on an operation pattern detected in the step (g), and the attribute value is specified based on the specified rule.

### (Note 15)

A computer-readable recording medium recording a program for displaying an information input image on a screen when key entry is made by a touch on a computer,
the program including a command for causing the computer to execute:
a step (a) of specifying an attribute value necessary for displaying the information input image, based on a rule preset for a display of the information input image; and
a step (b) of causing the information input image to be displayed on the screen based on the attribute value that is specified in the step (a).

### (Note 16)

The computer-readable recording medium according to Note 15,
wherein the information input image is an image of a keyboard that constitutes a software keyboard.

### (Note 17)

The computer-readable recording medium according to Note 15 or 16,
wherein the program further includes a command for causing the computer to execute:
a step (c) of receiving the rule to be used in the step (a) from an application program executed on the computer, and
a step (d) of setting, if the application program has changed the rule, the changed rule as the rule to be used in the step (a).

### (Note 18)

The computer-readable recording medium according to any of Notes 15 to 17,
wherein the rule is set for each execution status of an application program executed on the computer, and
in the step (a), a rule corresponding to execution status of the application program on the computer is specified, and the attribute value is specified based on the specified rule.

### (Note 19)

The computer-readable recording medium according to any of Notes 15 to 17,
wherein the program further includes a command for causing the computer to execute:
a step (e) of detecting a tilt of the computer,
wherein the rule is set for each tilted state of the computer, and
in the step (a), a corresponding rule is specified based on the tilt detected by the step (e), and the attribute value is specified based on the specified rule.

### (Note 20)

The computer-readable recording medium according to any of Notes 15 to 17,
wherein the program further includes a command for causing the computer to execute:
a step (f) of performing authentication based on an identifier that is set for each user of the computer,
wherein the rule is set for each identifier of the user, and
in the step (a), a rule corresponding to an identifier authenticated in the step (f) is specified, and the attribute value is specified based on the specified rule.

### (Note 21)

The computer-readable recording medium according to any of Notes 15 to 17,
wherein the program further includes a command for causing the computer to execute:
a step (g) of detecting an operation pattern made on the screen by a user of the computer,
wherein the rule is set for each operation pattern, and
in the step (a), a corresponding rule is specified based on an operation pattern detected in the step (g), and the attribute value is specified based on the specified rule.

Although the claimed invention has been described above with reference to the embodiments, the claimed invention is not limited to the above embodiments. Various modifications that will be appreciated by those skilled in the art can be made to the configurations and details of the claimed invention, within the scope of the claimed invention.

This application claims the benefit of priority based on Japanese Patent Application No. 2013-015298 filed on January 30, 2013, the entire disclosure of which is incorporated herein by reference.

### INDUSTRIAL APPLICABILITY

As described above, according to the present invention, the attribute values necessary for displaying the information input image, such as an image of a keyboard constituting a software keyboard can be easily changed, and an improvement of the visibility and the operability thereof can be achieved. The present invention is particularly useful for a terminal apparatus on which a software keyboard is implemented.

### REFERENCE SIGNS LIST

- 11: Display control unit
- 12: Image display unit
- 13: Rule management unit
- 14: System unit
- 15: System information acquisition unit
- 16: Attribute value setting unit
- 17: Input accepting unit
- 18: Rule storing unit
- 19: Attribute value list storing unit
- 20: Application program
- 21: Display panel
- 21a: Information input image
- 22: Touch-type input apparatus
- 30: Tilt detection unit
- 31: Authentication execution unit
- 32: Operation pattern detection unit
- 33: Acceleration sensor
- 40: Portable terminal apparatus
- 41: CPU
- 42: Memory
- 43: Display
- 44: Storage apparatus
- 45: Communication module
- 46: Touch panel
- 47: Bus
- 100: Information terminal (Embodiment 1)
- 200: Information terminal (Embodiment 2)
- 300: Information terminal (Embodiment 3)
- 400: Information terminal (Embodiment 4)

## Claims

1. An information terminal that accepts key entry made by a touch on an information input image on a screen, the information terminal comprising:
a display control unit that specifies an attribute value necessary for displaying the information input image, based on a rule preset for a display of the information input image; and
an image display unit that causes the information input image to be displayed on the screen based on the attribute value which is specified.

2. The information terminal according to claim 1,
wherein the information input image is an image of a keyboard that constitutes a software keyboard.

3. The information terminal according to claim 1 or 2,
further comprising a rule management unit that receives the rule from an application program executed on the information terminal, and provides the rule which is received to the display control unit,
wherein if the application program has changed the rule, the rule management unit provides the changed rule to the display control unit.

4. The information terminal according to any of claims 1 to 3,
wherein the rule is set for each execution status of an application program executed on the information terminal, and
the display control unit specifies a rule corresponding to execution status of the application program on the information terminal, and specifies the attribute value based on the specified rule.

5. The information terminal according to any of claims 1 to 3,
further comprising a tilt detection unit that detects a tilt of the information terminal,
wherein the rule is set for each tilted state of the information terminal, and the display control unit specifies a corresponding rule based on the tilt detected by the detection unit, and specifies the attribute value based on the specified rule.

6. The information terminal according to any of claims 1 to 3,
further comprising an authentication execution unit that performs authentication based on an identifier which is set for each user of the information terminal,
wherein the rule is set for each identifier of the user, and
the display control unit specifies a rule corresponding to an identifier authenticated by the authentication execution unit, and specifies the attribute value based on the specified rule.

7. The information terminal according to any of claims 1 to 3,
further comprising an operation pattern detection unit that detects an operation pattern made on the screen by a user of the information terminal,
wherein the rule is set for each operation pattern, and
the display control unit specifies a corresponding rule based on an operation pattern detected by the operation pattern detection unit, and specifies the attribute value based on the specified rule.

8. An information input image display method for displaying an information input image on a screen when key entry is made by a touch on an information terminal, the method comprising:
a step (a) of specifying an attribute value necessary for displaying the information input image, based on a rule preset for a display of the information input image; and
a step (b) of causing the information input image to be displayed on the screen based on the attribute value that is specified in the step (a).

9. A computer-readable recording medium recording a program for displaying an information input image on a screen when key entry is made by a touch on a computer,
the program including a command for causing the computer to execute:
a step (a) of specifying an attribute value necessary for displaying the information input image, based on a rule preset for a display of the information input image; and
a step (b) of causing the information input image to be displayed on the screen based on the attribute value that is specified in the step (a).
